# EUROPÄISCHE PATENTSCHRIFT

(11) **EP 2 209 624 B1**
(45) Veröffentlichungstag und Bekanntmachung des Hinweises auf die Patenterteilung: **03.10.2018**
(21) Anmeldenummer: 08750055.9
(22) Anmeldetag: 05.05.2008
(51) Int. Cl.: B32B 17/10, C03B 17/00

(54) **VERFAHREN ZUR HERSTELLUNG EINES SCHICHTFÖRMIGEN ODER GESCHICHTETEN ANORGANISCH/ORGANISCHEN VERBUNDMATERIALS**
METHOD FOR THE PRODUCTION OF A LAYERED OR STACKED INORGANIC/ORGANIC COMPOSITE MATERIAL
PROCÉDÉ DE FABRICATION D'UN MATÉRIAU COMPOSITE INORGANIQUE/ORGANIQUE STRATIFIÉ OU EN COUCHES

(30) Priorität: 13.11.2007 DE 102007054437
(43) Veröffentlichungstag der Anmeldung: 28.07.2010
(73) Patentinhaber: tesa SE, 22848 Norderstedt (DE)
(72) Erfinder: KEITE-TELGENBÜSCHER, Dr. Klaus, 22529 Hamburg (DE); STAIGER, Anja, 89264 Weissenhorn (DE); MICHEL, Uwe, 22844 Norderstedt (DE)
(86) Internationale Anmeldenummer: PCT/EP2008/055498
(87) Internationale Veröffentlichungsnummer: WO 2009/062762

(56) Entgegenhaltungen:
- WO-A-00/41978
- WO-A-2005/110741
- DE-A1- 3 127 721

## Beschreibung

Die vorliegende Erfindung betrifft ein Verfahren zur Herstellung eines schichtförmigen oder geschichteten anorganisch/organischen Verbundmaterials mit den Merkmalen des Oberbegriffs von Anspruch 1, ein alternatives Verfahren mit den Merkmalen des Oberbegriffs von Anspruch 4 sowie ein Verbundmaterial mit den Merkmalen des Oberbegriffs von Anspruch 21.

Viele verschiedene Arten von Produkten, wie zum Beispiel Lebensmittel, elektronische Aufbauten, medizinische Geräte und Pharmazeutika, sind sehr empfindlich gegenüber Gasen und Flüssigkeiten. Der Kontakt mit Gasen und Flüssigkeiten führt bei derartigen Produkten über einen gewissen Zeitraum häufig zu einer Alterung und schlussendlich zum Ausfall der Produkte. Insbesondere elektronische Aufbauten sind sehr anfällig gegenüber Feuchtigkeit, da diese zu einer verminderten Leitfähigkeit und Korrosion führen kann. Im Bereich der organischen Elektronik ist diese Empfindlichkeit im Verhältnis zur anorganischen Elektronik noch verstärkt ausgeprägt. Insofern bestehen besondere Anforderungen dahingehend, entsprechende Aufbauten und Geräte gegenüber Gasen und Flüssigkeiten zu kapseln. Ein Maß für eine derartige Kapselung stellt die Sauerstofftransmissionsrate OTR (Oxygen Transmission Rate) sowie die Wasserdampftransmissionsrate WVTR (Water Vapor Transmission Rate) dar. Die jeweilige Rate gibt dabei den Fluss von Sauerstoff beziehungsweise Wasserdampf durch einen Film unter spezifischen Bedingungen von Temperatur und relativer Luftfeuchtigkeit an. Je geringer diese Werte sind, desto besser ist das jeweilige Material zur Kapselung geeignet.

In den letzten Jahren wurden hochwertige Kunststofffolien als Substratmaterialien für die Herstellung von Displays entwickelt und als Ersatz für dünne Glassubstrate verwendet. Auch ermöglichen Aufbauten mit Kunststofffolien eine erhöhte Flexibilität. Alle diese Folien benötigen aufwendige Spezialverfahren in der Herstellung und verursachen somit relativ hohe Kosten. Zudem hat sich gezeigt, dass die Wasser- und Dampfdurchlässigkeit solcher Substratfolien nicht ausreichend reduziert werden kann. Dies hat zur Folge, dass Qualität und Lebensdauer von elektronischen Aufbauten auf Basis derartiger Substratfolien begrenzt sind. Durch die Folie hindurch diffundierender Sauerstoff führt zu einer Oxydation, insbesondere bei organischen Halbleitern und der aus unedlen Metallen bestehenden Elektroden, und somit zu einer Herabsetzung der Lebensdauer.

Aus dem Stand der Technik ist es bekannt, hohe Barrierewerte, also eine niedrige WVTR und eine niedrige OTR, mittels dünner Glasschichten zu erzielen (Schichtdicke ca. 30 - 50 µm). Um eine hinreichende Verarbeitbarkeit der Glasschichten zu erzielen, werden diese mit einer Polymerfolie kaschiert oder mit einem Polymer beschichtet. Ein derartiges anorganisch/organisches Verbundmaterial sowie Verfahren zu dessen Herstellung sind in der WO 00/41978 A1 offenbart. Die Herstellung eines derartigen Glas-Polymer-Verbundmaterials erfordert eine Vielzahl von Fertigungsschritten. Dabei wird zunächst das Glas hergestellt und nach Abkühlung mit dem Polymer in Kontakt gebracht. Das abgekühlte Glas selbst ist nur schwer handhabbar und die Gefahr der Zerstörung der Glasfläche ist insbesondere bei sehr dünnen Gläsern hoch.

Aus dem Stand der Technik ist es zudem bekannt, Mehrschichtaufbauten aus anorganischen und organischen Schichten auf einer Trägerfolie herzustellen. Die anorganischen Schichten werden dabei in der Regel im Vakuum abgeschieden. Beispiele von Mehrschichtaufbauten aus anorganischen und organischen Schichten zeigen die WO 00/36665 A1, die WO 2004/089620 A2 und die WO 03/094256 A2.

Die Verwendung von Polymerfolien zur Herstellung eines anorganisch/organischen Verbundmaterials ist jedoch problematisch, da diese in der Regel Oberflächendefekte aufweisen und somit ebenfalls defekte in den sehr dünnen vakuumabgeschiedenen anorganischen Schichten induzieren. Um diese zu vermeiden müssen solche Folien zusätzlich mit einer glättenden Schicht versehen werden. Auch sind die Investitionskosten für die erforderliche Vakuumtechnik sehr hoch und müssen bei den Mehrschichtaufbauten für eine In-line-Fertigung mehrfach getätigt werden, wenn man nicht eine Anlage mehrfach durchlaufen möchte. Ein weiteres Problem besteht bei der Verarbeitung von sehr dünnen Polymerfolien darin, diese in einem Laminierprozess handzuhaben und verzugsfrei zu laminieren.

Aus dem Stand der Technik ist es zudem bekannt in der Schmelze Compounds von Polymeren mit anorganischen Materialien, insbesondere Metallen oder deren Legierungen sowie niedrig schmelzenden Gläsern, auszuformen. Bei derartigen Compounds liegen sowohl die organischen als auch die anorganischen Materialien während der Compoundierung in einem Schmelzezustand vor. Die anorganische Phase liegt dabei diskontinuierlich vor, weswegen solche Compounds keine wesentliche Permeationsbarriere darstellen können. Beispiele für derartige Compounds zeigen die US 3 732 181, US 5 043 369, EP 1 248 816 B1, die EP 1 272 554 B1 sowie die EP 0 365 236 B1.

Die US 3 732 181 zeigt auch flächige Verbundmaterialien auf. Diese werden kleinflächig mittels Zusammenlaminieren von Glasfolien und Polymerfolien unter einer Presse hergestellt.

Die WO 2005/110741 A1 betrifft ein Verfahren zur Herstellung eines Schichtverbundmaterials, umfassend eine Glasfolie und eine auf der Glasfolie haftend aufgebrachte Polymerfolie, bei dem ein anorganisches Glasmaterial geschmolzen und gezogen wird, um die Glasfolie zu bilden, und die Polymerfilm auf mindestens einer Seite der Glasfolie aufgebracht wird.

Der vorliegenden Erfindung liegt das Problem zugrunde ein vereinfachtes Verfahren zur Herstellung eines vielseitig einsetzbaren anorganisch/organischen Verbundmaterials anzugeben.

Das zuvor aufgezeigte Problem wird bei einem Verfahren mit den Merkmalen des Oberbegriffs von Anspruch 1 durch die Merkmale des kennzeichnenden Teils von Anspruch 1 gelöst. Eine alternative Lösung stellt ein Verfahren gemäß Anspruch 4 dar. Eine weitere, nebengeordnete Lösung stellt ein Verbundmaterial gemäß Anspruch 21 bereit. Vorteilhafte Ausgestaltungen und Weiterbildungen sind Gegenstand der jeweiligen Unteransprüche.

Erfindungsgemäß wurde zunächst erkannt, dass es möglich ist, ein überwiegend anorganisches Material zu einem geschlossenen Flächengebilde zu extrudieren und dabei eine geringe Schichtdicke des Flächengebildes zu erzielen. Überraschend für den Fachmann ist zunächst, dass die Stabilität der Schmelze des anorganischen Materials ausreicht, um einen derartig dünnen Film zu extrudieren, der mit einem organischen Material, insbesondere einem polymeren Material, zusammengeführt werden kann.

Ferner ist es überraschenderweise realisierbar, eine überwiegend anorganische Schmelze großflächig mit einem organischen Material, insbesondere einem Polymermaterial, zusammenzuführen, ohne dass das Polymermaterial und/oder die flächige Schmelze zum Beispiel thermischen oder geometrischen Schaden nimmt. Insbesondere kann bei einem derartigen Verfahren zur Herstellung eines Verbundmaterials auch auf klebende Zwischenschichten verzichtet werden.

Dabei liegt das anorganische Material als kontinuierliche Phase vor bzw. wird zu dieser aufgeschmolzen. Damit fällt die Extrusion bzw. Beschichtung von Pasten, z.B. Keramikpasten mit einem geringen Anteil von Bindemittel, oder Pulverslurries nicht in den Bereich der Erfindung, da hierbei die anorganische Phase nicht kontinuierlich vorliegt und diese Materialien in der Regel erst nach der Extrusion bzw. Beschichtung aufgeschmolzen oder gesintert werden.

Unter einem überwiegend anorganischen Material wird hier ein anorganisches Material verstanden, welches höchstens einen Anteil von 20 Vol.-% organischem Material enthält, vorzugsweise weniger als 10%, besonders bevorzugt weniger als 1%. Je geringer der Anteil an organischem Material in dem anorganischen Material ist, desto bessere Barrierewerte können erzielt werde, also eine besonders niedrige WVTR und OTR.

Als Extrusion werden alle kontinuierlichen flächen- oder körperbildenden Verfahren verstanden, bei denen ein (schmelze-) flüssiges Material mittels Druck durch ein Werkzeug gefördert wird, in dem sich eine definierte geometrische Form, in der Regel eine ebene Fläche oder ein Profil (zum Beispiel ein Rohr) ausbildet und nach dem Austreten aus dem Werkzeug eine Verfestigung durch physikalische und/oder chemische Vorgänge erfährt.

Beim ersten erfindungsgemäßen Verfahren werden zur Herstellung eines anorganisch/organischen Verbundmaterials somit ein überwiegend anorganisches Material sowie ein polymeres Material bereitgestellt. Das überwiegend anorganische Material weist dabei eine Schmelztemperatur kleiner als etwa 500 °C auf.

Die Messung der Glasübergangstemperatur, auch Transformationspunkt genannt, kann u.a. mit Hilfe der Dynamisch Mechanischen Analyse (DMA) oder der dynamischen Differenzkalorimetrie (DSC) erfolgen. Bei der DMA wird eine starke Änderung des E- und G-Moduls sowie ein ausgeprägtes Maximum der Änderung der Dämpfung in einem engen Temperaturbereich beobachtet. Bei DSC-Messungen wird die Wärmekapazität (*c*ₚ) in Abhängigkeit von der Temperatur erfasst. Die Wärmekapazität zeigt einen Sprung bei der Glastemperatur. Die Schmelztemperatur kann durch den Erweichungspunkt definiert werden. Dieser wird auf dem Gebiet des Glasschmelzens oft als diejenige Temperatur angegeben, bei dem die dynamische Viskosität 10^{7,6} dPas (Dezipascalsekunde=Poise) beträgt. Auch die Angabe des Littleton-Erweichungspunktes nach ASTM C338-93 (2003) ist üblich.

Die beiden Materialien werden getrennt voneinander geschmolzen und sodann aus der Schmelze koextrudiert. Die Koextrusion erfolgt derart, dass das Verbundmaterial, insbesondere als Flächengebilde, ausgebildet wird. Dabei bietet die Koextrusion gegenüber der einfachen Extrusion den Vorteil, dass beide Materialien bei ähnlichen Temperaturen miteinander in Verbindung gebracht werden. Somit kann sich eine bessere Verbindung zwischen dem anorganischen Material und dem polymeren Material ausbilden. Zudem wird die Schicht des anorganischen Materials bereits während des Verlassens der Extrusionsvorrichtung durch den sich bildenden Polymerfilm geschützt und stabilisiert.

Grundsätzlich sind für die Koextrusion alle bekannten Verfahren anwendbar, wie sie zum Beispiel in Walter Michaeli: Extrusion Dies for Plastics and Rubber, München, Hanser Verlag 2003, beschrieben sind. Bevorzugt erfolgt die Koextrusion jedoch durch eine Koextrusionsdüse (Multi Manifold Die), da diese für Schmelzen unterschiedlicher Viskositäten und Temperaturen besser geeignet ist als beispielsweise der Koextrusionsadapter. Aber auch die Koextrusion mittels eines Koextrusionsadapters ist zur Herstellung des Verbundmaterials möglich.

In bevorzugter Ausgestaltung des erfindungsgemäßen Verfahrens wird das anorganische Material zwischen zwei Schichten eines polymeren Materials eingeschlossen. Der Einschluss kann dabei im Rahmen der Koextrusion erfolgen, es kann jedoch auch vorgesehen werden, dass das anorganische Material auf einen polymeren Träger extrudiert wird und anschließend mit einer weiteren polymeren Schicht beschichtet wird. Eine derartige Beschichtung kann mittels aus dem Stand der Technik bekannter Verfahren durchgeführt werden. Insbesondere sollte die Beschichtung aber erfolgen, solange die Temperatur des überwiegend anorganischen Materials noch oberhalb der Schmelz- oder Glastemperatur ist. Eine Einbettung des anorganischen Materials zwischen zwei Schichten eines polymeren Materials ist insbesondere vorteilhaft, da hierbei eventuell auftretende Eigenspannungen nach dem Abkühlen symmetrisch verteilt sind und somit ein Durchbiegen des Flächengebildes vermieden oder zumindest verringert wird.

Neben einem zwei- oder dreischichteigen Aufbau können auch beliebige Schichtfolgen mit beliebiger Anzahl organischer und anorganischer Schichten koextrudiert oder beschichtet werden. Insbesondere können auch mehrere Schichten anorganischen Materials gemeinsam oder nacheinander extrudiert werden.

Sofern das anorganische Material zwischen zwei Schichten eines polymeren Materials eingeschlossen wird, kann zudem vorgesehen werden, dass diese beiden Schichten aus unterschiedlichem polymerem Material hergestellt werden. Dadurch ist es möglich, die beiden Seiten des Verbundmaterials individuell für die jeweilige Verwendung anzupassen. Beispielsweise kann vorgesehen sein, dass eine Schicht Materialien mit einer besonders hohen Kratzfestigkeit enthält, während die andere Schicht speziell zur Verbesserung der optischen Eigenschaften angepasst ist.

Bei einem zweiten erfindungsgemäßen Verfahren wird das überwiegend anorganische Material unmittelbar auf einen Träger extrudiert. Der Träger kann dabei als vorübergehender Träger (Hilfsträger) vorgesehen sein, der nach weiteren Prozessschritten wieder entfernt wird. Der Träger kann aber auch als permanenter Träger bereitgestellt werden und mit dem anorganischen Material das Verbundmaterial ausbilden. Insbesondere handelt es sich bei dem Träger um einen Träger aus polymerem Material. Auch bei diesem Verfahren wird wiederum ein anorganisches Material mit einer Schmelz- oder Glasübergangstemperatur kleiner als etwa 500 °C eingesetzt, um eine Beeinträchtigung des organischen Materials durch zu hohe Temperaturen zu vermeiden. Die relativ niedrige Temperatur hat darüber hinaus den Vorteil, dass auch bei großen Unterschieden des Wärmeausdehnungskoeffizienten eine Verbindung von anorganischem und organischem Material möglich ist.

Durch die Extrusion des anorganischen Materials auf den Träger kann dieses auch hier als vollflächige Schicht mit einer im Wesentlichen gleichmäßigen Schichtdicke auf den Träger aufgebracht werden. Sofern der Träger als permanenter Träger das Verbundmaterial mit ausbildet, ergibt sich ein weiterer Vorteil unmittelbar dadurch, dass das überwiegend anorganische Material aus der Schmelze unmittelbar auf den Träger extrudiert wird. Dadurch, dass dies unmittelbar nach der Extrusion geschieht, ist die Temperatur des Materials noch erhöht, wodurch eine besonders gute Verbindung zwischen dem Träger und dem anorganischen Material möglich ist, ohne dass eine zusätzliche Schicht, wie zum Beispiel eine Klebstoffschicht, vorgesehen sein muss.

Sofern der Träger, auf den das anorganische Material als Schicht extrudiert wird, nur als Hilfsträger dient, wird auf die dem Hilfsträger gegenüberliegende Seite des anorganischen Materials ein polymeres Material als organisches Material aufgebracht. Das Aufbringen des polymeren Materials kann durch Aufkaschieren einer Polymerfolie, durch eine Beschichtung mit dem polymeren Material aus der Schmelze oder aber durch eine Beschichtung mit dem polymeren Material aus einer Lösung oder Dispersion erfolgen. Hier wird insbesondere auf die aus dem Stand der Technik bekannten Verfahren zur Ausbildung einer polymeren Schicht, insbesondere einer polymeren Folie, verwiesen.

Von der Extrusion werden auch Beschichtungsverfahren abgeleitet. Darunter fallen im Sinne der Erfindung auch die Extrusionsbeschichtung, bei der das extrudierte Material in noch flüssigem Zustand auf ein an der Düse vorbeilaufendes Trägermaterial aufgebracht wird, wobei es oft noch einem Verstreckvorgang ausgesetzt wird, um z.B. die Dicke des Materials abzusenken und/oder zu vergleichmäßigen. Darunter fällt ebenfalls die sogenannte Düsenrakelbeschichtung. Während bei der Extrusionsbeschichtung die Dicke des Materials durch die Dicke der Düsenöffnung, den Massestrom und die Abzugsgeschwindigkeit definiert wird, wird bei der Düsenrakelbeschichtung die Dicke im Wesentlichen durch den Abstand der Düse zum Trägermaterial eingestellt.

Insbesondere die im Folgenden beschrieben weiteren Vorteile und Ausgestaltungen sind vorteilhaft bezüglich beider Herstellungsverfahren, also der Koextrusion und der einfachen Extrusion des anorganischen Materials auf einen (Hilfs-)Träger, auch wenn dies nicht jedes Mal explizit erwähnt wird.

Das polymere Material sollte auf das überwiegend anorganische Material aufgebracht werden, solange dessen Temperatur oberhalb der Schmelz- oder Glastemperatur ist. Bei Einhaltung dieser Schwellentemperatur kann ein Verbundmaterial mit besonders hoher Verbundhaftung hergestellt werden.

Verfahrenstechnisch besonders vorteilhaft ist hinsichtlich der Extrusion des anorganischen Materials auf einen (Hilfs-)Träger, dass die Extrusionsdüse oder der Extrusionsadapter möglichst nah an den Träger herangeführt wird. Insbesondere sollte der Abstand zwischen Extrusionsdüse oder Extrusionsadapter und Träger nicht mehr als 10 cm betragen. Gerade durch einen möglichst geringen Abstand kann zudem eine zu starke und unkontrollierte Abkühlung des anorganischen Materials vor dem Auftreffen auf den träger vermieden werden.

Durch die erfindungsgemäßen Verfahren ist es zudem möglich, das Verbundmaterial mit einer möglichst geringen Dicke herzustellen. Insbesondere können Dicken kleiner als etwa 200 µm, vorzugsweise sogar kleiner als etwa 100 µm hergestellt werden. Dennoch kann auch bei einer derartigen Dicke durch das überwiegend anorganische Material ein geringer WVTR sowie ein geringer OTR erzielt werden.

In einer weiterhin bevorzugten Variante ist die Dicke der anorganischen Schicht kleiner als 25 µm, besonders bevorzugt kleiner als 10 µm, ganz bevorzugt kleiner als 5 µm. Dies ermöglicht eine besonders hohe Flexibilität des Verbundmaterials.

Die erfindungsgemäßen Verfahren zur Herstellung eines Verbundmaterials bieten zudem die Möglichkeit, dass das überwiegend anorganische Material nach der Extrusion und noch vor der Ablage auf dem Träger verstreckt wird oder dass das Verbundmaterial nach der Extrusion gemeinsam verstreckt wird. Hierdurch kann die Schichtdicke des Verbundmaterials abermals reduziert werden. Durch die Verstreckung kann zudem die Schichtdicke vergleichmäßigt werden. Zudem können durch die Verstreckung besondere optische Eigenschaften eingestellt werden.

Die Verstreckung kann dabei in Längsrichtung zur Extrusionsrichtung erfolgen oder alternativ oder zusätzlich quer zur Extrusionsrichtung. Die Verstreckung wird üblicherweise mindestens im Verhältnis von 1:2, vorzugsweise im Verhältnis von 1:5 durchgeführt.

Zu den der Extrusion vorteilhaft nachgelagerten Prozessen, wie dem oben erwähnten Verstrecken, gehören auch formgebende Prozesse, wie z.B. die Blasfolienherstellung, das Blasformen oder das Tiefziehen. Mittels solcher Prozesse kann dem Extrudat eine dreidimensionale Form gegeben werden.

In bevorzugter Ausgestaltung wird zudem nach der Herstellung des Verbundmaterials, insbesondere also nach der Extrusion, eine Temperung des Verbundmaterials bei einer Temperatur zwischen etwa 30°C und der Glasübergangstemperatur oder dem Schmelzpunkt des anorganischen Schichtmaterials durchgeführt. Mittels der Temperung können dabei im Material eingefrorene Eigenspannungen verringert werden.

Bei dem anorganischen Material handelt es sich bevorzugt um ein Glas. Insbesondere können für die Erfindung "niedrig schmelzende" Gläser eingesetzt werden, d.h. Gläser mit niedriger Glasübergangstemperatur (Transformationstemperatur) T_{G}, insbesondere also mit einer T_{G} kleiner 500 °C.

Glas bietet neben der in diesem Verfahren guten Verarbeitbarkeit den Vorteil, dass es transparent ist. In Verbindung mit einem transparenten polymeren Material kann somit ein transparentes Verbundmaterial hergestellt werden, das die hohen Barrierewerte erfüllt. Als Glas eignet sich insbesondere Bleiglas, Phosphatglas oder Boratglas. Solche Gläser sind beispielsweise in der DE 765307 A, der US 5,013,360, der US 5,328,874, der US 5,534,469, der US 7,148,165 B2, der US 5,281,560 sowie der US 5,122,484 beschrieben, auf deren Offenbarungsgehalt bezüglich der einzusetzenden Gläser, insbesondere deren Zusammensetzung, explizit verwiesen wird.

Ganz besonders bevorzugt eignen sich Gläser, bei denen Phosphat oder Borat durch Sulfat zumindest teilweise ersetzt ist und/oder bei denen Netzwerkwandler eingesetzt werden und/oder bei denen der Mischalkalieffekt ausgenutzt wird. Der Mischalkalieffekt beschreibt das Ersetzen von zum Beispiel Na₂O teilweise durch Li₂O oder K₂O und bewirkt wie auch die anderen Maßnahmen eine Erniedrigung der Glasübergangstemperatur. Auch Gläser aus dem System SnO/P₂O₅ oder ZnO/P₂O₅ sind als besonders niedrig schmelzend bevorzugt einsetzbar.

Bevorzugt werden auch so genannte "kurze" Gläser eingesetzt, d.h. Gläser, die einen schmalen Schmelzbereich haben und bei denen die Viskosität oberhalb des Schmelzbereichs vergleichsweise stark abfällt. Durch diese Eigenschaft werden in der Regel bereits bei relativ niedrigen Temperaturen (etwa 50 °C oberhalb der Glasübergangstemperatur) Viskositäten erreicht, die niedrig genug sind, um eine Extrusion, insbesondere eine Koextrusion zu ermöglichen. Diese Erweichungstemperatur wird in der Regel nach der ASTM C338-93 (2003) ermittelt (Littleton softening point).

Da niedrigschmelzende Gläser oft gegenüber äußerer Medieneinwirkung empfindlich sind, werden weiterhin bevorzugt korrosionsstabile Gläser eingesetzt. Insbesondere eine hohe Wasserbeständigkeit ist von Vorteil. Solche Gläser mit niedriger Glastemperatur sind z.B. in P.A. Tick: Water durable glasses with ultra low melting temperatures, Physics and Chemistry of Glasses 25(1984) S. 149, offenbart.

Aus Arbeitsschutzgründen werden bevorzugt bleifreie Gläser eingesetzt. Solche sind z.B. in EP 1 248 816 B1 offenbart.

In einer bevorzugten Ausführung wird dem anorganischen Material zumindest ein Additiv zugesetzt, welches eine Fließverbesserung beziehungsweise eine Absenkung der Viskosität bei der Extrusion bewirkt. Das Additiv kann dem anorganischen Material dabei vor oder während der Schmelze zugesetzt werden. Ein geeignetes Additiv ist zum Beispiel Polyalkencarbonat, erhältlich unter der Bezeichnung QPAC von der Firma Empower Materials, Newark, DE, USA.

Bei dem eingesetzten polymeren Material handelt es sich bevorzugt um einen hochtemperaturbeständigen Thermoplast. Ein derartiger Thermoplast ermöglicht eine leichte Verarbeitung. Ferner ist ein derartiger Thermoplast äußerst inert, so dass keine chemischen Reaktionen des Thermoplasten berücksichtigt werden müssen.

Als polymeres Material wird zudem bevorzugt ein transparentes Material verwendet. Insbesondere in Kombination mit einem transparenten Glas kann so ein Verbundmaterial mit hoher Transparenz hergestellt werden. Die Transparenz sollte insbesondere im sichtbaren Spektralbereich (Wellenlänge von etwa 400 nm bis etwa 800 nm) gewährleistet sein. Hierzu sollte der Transmissionsgrad des Verbundmaterials mindestens 70%, vorzugsweise mindestens 80%, weiter vorzugsweise mindestens 85% betragen. Um diese Transparenz zu erzielen sollten auch die einzelnen eingesetzten Materialien entsprechende Transmissionsgrade aufweisen.

Die Transparenz des polymeren Materials kann dem Material selbst inne wohnen, zum Beispiel bei amorphen Polymeren, oder durch besondere Verarbeitung des Polymers hergestellt werden, wie dies zum Beispiel durch die hohe Verstreckung von orientiertem Polypropylen bekannt ist, welches durch die Orientierung der Kristallite transparent wird. Ein weiteres Beispiel für eine über die Verarbeitungsparameter hergestellte Transparenz ist das plötzliche Abkühlen der Schmelze, so dass keine oder nur sehr kleine Kristallite wachsen können.

Bevorzugt wird zudem ein organisches Material verwendet, das in einem Temperaturbereich von 20 bis 200 °C eine Wärmeausdehnung von weniger als 25 x 10⁻⁶ K⁻¹ besitzt. Die geringe Wärmeausdehnung ist insbesondere vorteilhaft, um möglichst wenig Verspannungen zwischen dem anorganischen Material, insbesondere Glas, und dem polymeren Material zu erhalten. Die geringe Wärmeausdehnung kann bei einem transparenten Polymer zum Beispiel durch Füllung eines Polymers mit anorganischen Nanopartikeln erreicht werden, wobei die optische Transparenz erhalten bleibt. Durch diese Auswahl wird der Unterschied in der Wärmeausdehnung zum Glas verringert, was zu weniger Eigenspannungen im Verbundmaterial führt.

Ferner weist das anorganische Material bevorzugt eine Wärmeausdehnung von mehr als 12 x 10⁻⁶ K⁻¹ in einem Temperaturbereich von 20 °C bis 300 °C auf. Durch eine derartige Auswahl wird der Unterschied in der Wärmeausdehnung zum Polymer verringert, was zu weniger Eigenspannungen in dem Verbundmaterial führt. Solche Gläser mit einer Glastemperatur unter 500 °C sind zum Beispiel in Raab, D. et al: Inno Regio Südthüringen - Verbundprojekt: Entwicklung einer Schmelzkerntechnologie, Teilprojekt 2: Lösliche Gießkerne aus Glas: Schlussbericht, Förderkennzeichen BMBF 0312902B, beschrieben, deren Offenbarungsgehalt vorliegend durch Bezugnahme mit eingeschlossen wird.

Als polymeres Material wird weiter bevorzugt ein elastomeres oder elastomermodifiziertes Polymer eingesetzt. Hierdurch ist es möglich, gegebenenfalls vorhandene Eigenspannungen in dem polymeren Material elastisch auszugleichen. Hierzu eignen sich beispielsweise Silikone als Bestandteil des polymeren Materials.

In einer weiter bevorzugten Ausführung wird als polymeres Material eine Klebemasse eingesetzt. Dafür sind alle dem Fachmann bekannten extrudier- oder beschichtbaren Klebemassen verwendbar. Hierunter fallen sowohl Heißschmelzklebemassen, z. B. auf der Basis von Polyolefin(-Co)-Polymeren oder Polyamiden, reaktive Klebemassen, z.B. auf der Basis von Epoxiden oder Acrylaten und Haftklebemassen, z.B. auf der Basis von Acrylsäureestern, Synthesekautschuken (insbesondere Blockcopolymeren) oder Silikonen. Besonders vorteilhaft sind viskose oder viskoelastische Klebemassen, da hiermit Spannungen im Material durch Fließprozesse ausgeglichen werden können. Gleiches gilt für viskose Polymere, wie z.B. Polyisobutylen oder Ethylen-VinylacetatCopolymere mit einem Vinylacetatgehalt von mehr als 40 %, die in der Regel nicht als Klebemassen bezeichnet werden, aber stark viskose Eigenschaften aufweisen.

In bevorzugter Ausgestaltung wird ein mehrschichtiges Verbundmaterial hergestellt, bei dem mindestens auf einer Schicht anorganischen Materials eine Schicht eines Klebstoffs als polymeres Material aufgebracht wird und auf diese Schicht wiederum zumindest ein polymeres Trägermaterial aufgebracht wird. Die Herstellung kann auch hier durch Koextrusion aller zumindest drei Schichten oder durch nachfolgende Beschichtung erfolgen. Das weitere polymere Trägermaterial ergibt eine höhere Stabilität des Verbundmaterials.

In einer weiteren bevorzugten Ausgestaltung wird ein mehrschichtiges Verbundmaterial hergestellt, bei dem mindestens auf einer Schicht anorganischen Materials eine Schicht eines polymeren Materials aufgebracht wird und auf diese Schicht zumindest eine Schicht eines Klebstoffs aufgebracht wird. Die Herstellung kann auch hier durch Koextrusion aller zumindest drei Schichten oder durch nachfolgende Beschichtung erfolgen. Dieser Verbundaufbau bietet den Vorteil, dass er ohne zusätzliche weitere Schritte auf einem Substrat verklebt werden kann.

In weiter bevorzugter Ausgestaltung der Verfahren wird das Verbundmaterial nach der Herstellung gestanzt oder, insbesondere mittels eines Lasers oder Wasserstrahls, geschnitten. Erstaunlicherweise hat sich gezeigt, dass das Stanzen und Laserschneiden des Verbundmaterials möglich ist, ohne zu Beeinträchtigungen in dem Verbund beispielsweise durch Risse in dem Glas zu führen. Somit ist es auf einfache Weise möglich, das Verbundmaterial in einem weiteren Verfahrensschritt für die weitere Verarbeitung vorzubereiten.

Das erhaltene Verbundmaterial kann vorteilhaft in vielerlei Anwendungen eingesetzt werden, in denen eine transparente oder nicht transparente Permeationsbarriere gefordert ist.

Im Elektronikbereich sind hier besonders vorteilhaft Solarzellen zu nennen, vor allem Dünnschichtsolarzellen, z.B. auf der Basis von Silizium oder Kupfer-Indium-Selen oder deren Derivaten. Aber auch Farbstoffsolarzellen und Solarzellen auf der Basis organischer Elektronik, z.B. hetero-konjugierter Polymere oder anderer polymerer Halbleiter (wie Small Molecules und weitere dem Fachmann bekannte Verbindungen).

Vorteilhaft kann eine solches Verbundmaterial auch im Bereich der organischen Leuchtdioden z.B. für Display und Beleuchtungsanwendungen eingesetzt werden.

Im Bereich der Displayanwendungen kann das Material auch vorteilhaft zur zumindest einseitigen Verkapselung von elektrophoretischen (E-Paper, Electrowetting-Displays) oder elektrochromen Anzeigevorrichtungen oder Displays eingesetzt werden.

Eine weitere vorteilhafte Anwendung ist im Bereich der elektrolumineszierenden Aufbauten zu sehen, da die verwendeten Pigmente (Phosphors) sehr feuchtigkeitsempfindlich sind und somit der Gesamtaufbau mit dem erfindungsgemäßen Schichtmaterial vorteilhaft gekapselt werden kann, was erheblich weniger Aufwand ist, als die derzeitig verwendete Kapselung jedes einzelnen Pigmentteilchens.

Weitere vorteilhafte Anwendungen liegen im Bereich der Verpackung empfindlicher Güter. Dabei schützt das erfindungsgemäße Material sowohl vor Emission aus der Verpackung (z.B. Feuchte-, CO₂- oder Aromaverlust) wie auch vor Immission in die Verpackung (z.B. Fremdaromen oder Sauerstoff)

Besonders vorteilhafte Anwendungen liegen im Bereich der Lebensmittelverpackungen. Die einfache Herstellweise führt zu geringen Kosten und die leichte Verformbarkeit in der Wärme lässt vielfältige, auch dreidimensionale Verpackungsgeometrien zu, die z.B. durch Tiefziehen oder Blasformen hergestellt werden können. Als Beispiele sind hier tiefgezogene Becher oder blasgeformte Flaschen zu nennen.

Weitere besonders vorteilhafte Anwendungen liegen im Bereich der Verpackung pharmazeutischer Produkte. Die Vorteile sind ähnlich denen im Lebensmittelbereich. Als Beispiele sind hier Blisterverpackungen, Medikamentenfläschchen, Infusionsflüssigkeitsbehälter, Ampullen oder medikamentengefüllte Einmalspritzen zu nennen.

Weitere vorteilhafte Anwendungen werden auch im Bereich der Verglasung oder Verscheibung gesehen. Polymere Verscheibungen werden somit erfindungsgemäß mit einer kratzfesten Schutzschicht versehen. Auf der anderen Seite können mit dem Verfahren auch Verbundglasscheiben hergestellt werden, bei denen in der Regel die Polymerschicht dünner als die Glasschicht ist. Anwendungen solcher Verscheibungen werden besonders im Fahrzeug-, Flugzeug und Schiffbau gesehen.

### Beispiel 1

Es wurde ein Phosphatglas mit folgender Zusammensetzung (in Mol-%) von der Friedrich Farbglashütte GmbH, Kaufbeuren, bezogen:
4,9 % Li₂O; 9,4 % Na₂O; 7,1 % K₂O; 1,6 % CaO; 36,6 % ZnO; 20 % P₂O₅ und 20,4 % SO₃.

Die Körnung des Phosphatglases lag unterhalb 1,5 mm. Das Glas wies eine Glasübergangstemperatur von 270 °C auf. Das Glas wurde in einem Kolbenextruder bei einer Temperatur von 350 °C aufgeschmolzen und in eine Breitschlitz-Koextrusionsdüse gefördert.

Als Polymer wurde ein Polycarbonat des Typs Apec 2000 von Bayer Material Science verwendet. Es lag in Granulatform vor. Das Polymer wurde in einem Einschneckenextruder bei einer Maximaltemperatur von 350 °C aufgeschmolzen und ebenfalls in die Koextrusionsdüse gefördert.

In der Koextrusionsdüse wurde der Glasschmelzenstrom beidseitig mit je einem Strom Polymerschmelze belegt. Jeder der drei Materialströme wies den gleichen Volumendurchsatz auf. Die vereinigten Ströme wurden schließlich aus der Koextrusionsdüse ausgetragen und auf eine mit 200 °C temperierte Chill-Roll aufgelegt. Während des Austragens wurde der Verbund im Verhältnis 1:5 längs verstreckt. Die Düsenlippe wies dabei einen Spalt von 0,8 mm auf.

Es ergab sich dabei ein gleichmäßiger Verbund mit Schichtdicken von jeweils etwa 80 µm. Der Verbund erwies sich als biegestabil um einen Radius von 100 mm, zeichnete sich also durch technisch brauchbare Flexibilität aus.

Die Messung der Permeation von Sauerstoff und Wasserdampf wurde in Anlehnung an DIN 53380 mittels Permeationsmessgeräten der Fa. Mocon ermittelt. Dabei wurde die Sauerstoffpermeation bei 23 °C und 50% relativer Feuchte, die Permeation von Wasserdampf bei 37,8 °C und 90% relativer Feuchte ermittelt. Die Messwerte blieben jeweils unterhalb der Nachweisgrenze des Messgeräts von 10⁻³ g/m²d beziehungsweise 10⁻³ cm³/m²d bar. Somit konnten mit dem erfindungsgemäßen Verfahren defektfreie Barrierematerialien hergestellt werden.

Neben den Herstellungsverfahren betrifft die vorliegende Erfindung zudem ein Verbundmaterial, das gemäß einem der Herstellungsverfahren hergestellt wurde. Das Verbundmaterial weist somit mindestens eine Schicht eines überwiegend anorganischen Materials sowie mindestens eine Schicht eines polymeren Materials auf. Mindestens die überwiegend anorganische Schicht des Verbundmaterials ist extrudiert. Das überwiegend anorganische Material weist eine Dicke zwischen 0,5 und 25 µm, bevorzugt zwischen 0,5 und 10 µm, besonders bevorzugt zwischen 0,5 und 5 µm auf.

Bezüglich der weiteren Ausgestaltungen des Verbundmaterials sowie der einzelnen Komponenten wird insbesondere auf die vorherige Beschreibung des erfindungsgemäßen Verfahrens verwiesen.

Das Verbundmaterial zeichnet sich in bevorzugter Ausgestaltung zudem durch eine OTR kleiner als 10⁻³ cm³/m²d bar aus sowie eine WVTR kleiner als 10⁻³ g/m²d bar.

## Patentansprüche

1. Verfahren zur Herstellung eines schichtförmigen oder geschichteten anorganisch/organischen Verbundmaterials bei dem ein überwiegend anorganisches Material, wobei das Material organisches Material zu einem Anteil von höchstens 20 Vol.-% enthält, bereitgestellt wird und
bei dem ein polymeres Material bereitgestellt wird,
**dadurch gekennzeichnet,**
**dass** das überwiegend anorganische Material eine Schmelztemperatur kleiner als 500°C aufweist, dass das überwiegend anorganische Material und das polymere Material jeweils geschmolzen werden und
**dass** das überwiegend anorganische Material und das polymere Material aus der Schmelze koextrudiert werden und so das Verbundmaterial ausbilden, wobei als überwiegend anorganisches Material ein Glas extrudiert wird.

2. Verfahren nach Anspruch 1, **dadurch gekennzeichnet,**
**dass** das überwiegend anorganische Material und das polymere Material durch eine Koextrusionsdüse oder einen Koextrusionsadapter koextrudiert werden.

3. Verfahren nach Anspruch 1 oder 2, **dadurch gekennzeichnet,**
**dass** das überwiegend anorganische Material zwischen zwei Schichten eines polymeren Materials koextrudiert wird, wobei vorzugsweise die zwei polymeren Schichten aus voneinander unterschiedlichem polymerem Material extrudiert werden.

4. Verfahren zur Herstellung eines anorganisch/organischen Verbundmaterials bei dem ein Träger bereitgestellt wird und bei dem auf den Träger ein überwiegend anorganisches Material, wobei das Material organisches Material zu einem Anteil von höchstens 20 Vol.-% enthält, aufgebracht wird,
**dadurch gekennzeichnet,**
**dass** das überwiegend anorganische Material eine Schmelztemperatur kleiner als 500°C aufweist,
**dass** das überwiegend anorganische Material geschmolzen wird,
**dass** das überwiegend anorganische Material aus der Schmelze auf den Träger extrudiert wird, wobei als überwiegend anorganisches Material ein Glas extrudiert wird, und
**dass** der Träger aus polymerem Material bereitgestellt wird und/oder dass auf die dem Träger gegenüberliegende Seite des überwiegend anorganischen Materials ein polymeres Material aufgebracht wird.

5. Verfahren nach Anspruch 4, **dadurch gekennzeichnet,**
**dass** auf die dem Träger gegenüberliegende Seite des überwiegend anorganischen Materials ein polymeres Material aufkaschiert, aus einer Lösung oder Dispersion aufgebracht oder aus der Schmelze extrudiert wird.

6. Verfahren nach einem der Ansprüche 1 bis 5, **dadurch gekennzeichnet,**
**dass** das polymere Material auf das überwiegend anorganische Material aufgebracht wird, solange dessen Temperatur oberhalb der Schmelz- oder Glastemperatur ist.

7. Verfahren nach einem der Ansprüche 1 bis 6, **dadurch gekennzeichnet,**
**dass** das Verbundmaterial mit einer Dicke kleiner 200 µm, insbesondere kleiner 100 µm hergestellt wird.

8. Verfahren nach einem der Ansprüche 1 bis 7, **dadurch gekennzeichnet,**
**dass** das überwiegend anorganische Material und/oder das Verbundmaterial nach der Extrusion verstreckt wird, vorzugsweise
mindestens im Verhältnis 1:2, weiter vorzugsweise mindestens im Verhältnis 1:5, längsverstreckt und/oder vorzugsweise
mindestens im Verhältnis 1:2, weiter vorzugsweise mindestens im Verhältnis 1:5, querverstreckt.

9. Verfahren nach einem der Ansprüche 1 bis 8, **dadurch gekennzeichnet,**
**dass** das Verbundmaterial nach der Extrusion bei einer Temperatur zwischen 30 °C und der Erweichungstemperatur oder dem Schmelzpunkt des überwiegend anorganischen Materials getempert wird.

10. Verfahren nach einem der Ansprüche 1 bis 9, **dadurch gekennzeichnet,**
**dass** als überwiegend anorganisches Material Bleiglas, Phosphatglas oder Boratglas, extrudiert wird.

11. Verfahren nach Anspruch 10, **dadurch gekennzeichnet,**
**dass** als überwiegend anorganisches Material ein Glas mit einem schmalen Schmelzbereich, insbesondere eines, bei dem die Erweichungstemperatur nicht mehr als 50 °C oberhalb der Glastemperatur liegt, extrudiert wird.

12. Verfahren nach einem der Ansprüche 1 bis 11, **dadurch gekennzeichnet,**
**dass** dem überwiegend anorganischen Material vor oder während der Schmelze ein Additiv zur Fließverbesserung zugesetzt wird.

13. Verfahren nach einem der Ansprüche 1 bis 12, **dadurch gekennzeichnet,**
**dass** in der Extrusion als überwiegend anorganisches Material ein anorganisches Material mit einem Anteil von maximal 10 Vol.-% organischem Material, vorzugsweise von maximal 1 Vol.-% organischem Material, verwendet wird.

14. Verfahren nach einem der Ansprüche 1 bis 13, **dadurch gekennzeichnet,**
**dass** als polymeres Material ein hochtemperaturbeständiger Thermoplast aufgebracht, insbesondere extrudiert, wird.

15. Verfahren nach einem der Ansprüche 1 bis 14, **dadurch gekennzeichnet,**
**dass** als überwiegend anorganisches Material ein transparentes Material extrudiert wird, insbesondere mit einem Transmissionsgrad von mindestens 70% im sichtbaren Spektralbereich und/oder
als polymeres Material ein transparentes Material aufgebracht, insbesondere extrudiert, wird, insbesondere mit einem Transmissionsgrad von mindestens 70% im sichtbaren Spektralbereich

16. Verfahren nach einem der Ansprüche 1 bis 15, **dadurch gekennzeichnet,**
**dass** als polymeres Material ein zunächst nicht transparentes Material aufgebracht, insbesondere extrudiert, wird und eine Transparenz des polymeren Materials durch eine weitere Verarbeitung erzielt wird, insbesondere mit einem Transmissionsgrad von mindestens 70% im sichtbaren Spektralbereich.

17. Verfahren nach einem der Ansprüche 1 bis 16, **dadurch gekennzeichnet,**
**dass** als polymeres Material ein polymeres Material aufgebracht, insbesondere extrudiert, wird, das in einem Temperaturbereich von 20°C bis 200°C eine Wärmeausdehnung von weniger als 25·10⁻⁶ K⁻¹ aufweist und/oder
als überwiegend anorganisches Material ein Material, insbesondere Glas, extrudiert wird, das in einem Temperaturbereich von 20°C bis 300°C eine Wärmeausdehnung von mehr 12·10⁻⁶ K⁻¹ aufweist.

18. Verfahren nach einem der Ansprüche 1 bis 17, **dadurch gekennzeichnet,**
**dass** dem polymeren Material vor oder während der Schmelze ein Additiv zur Absenkung der Wärmeausdehnung zugesetzt wird,
vorzugsweise, dass dem polymeren Material nanoskalige Partikel zugesetzt werden.

19. Verfahren nach einem der Ansprüche 1 bis 18, **dadurch gekennzeichnet,**
**dass** als polymeres Material ein elastomeres oder elastomermodifiziertes Polymer, vorzugsweise ein Klebstoff, aufgebracht, insbesondere extrudiert, wird.

20. Verfahren nach einem der Ansprüche 1 bis 19, **dadurch gekennzeichnet,**
**dass** das Verbundmaterial gestanzt oder, insbesondere mittels eines Lasers, oder Wasserstrahls, geschnitten wird.

21. Verbundmaterial mit mindestens einer Schicht eines überwiegend anorganischen Materials, wobei das Material organisches Material zu einem Anteil von höchstens 20 Vol.-% enthält, und mindestens einer Schicht eines polymeren Materials, **dadurch gekennzeichnet,**
**dass** mindestens die überwiegend anorganische Schicht, die organisches Material zu einem Anteil von höchstens 20 Vol.-% enthält, extrudiert ist, wobei das überwiegend anorganische Material ein Glas ist und eine Dicke zwischen 0,5 und 25 µm, bevorzugt zwischen 0,5 und 10 µm, besonders bevorzugt zwischen 0,5 und 5 µm aufweist.

22. Verbundmaterial nach Anspruch 21, **gekennzeichnet durch** die Herstellung gemäß des Verfahrens nach einem der Ansprüche 1 bis 20.

23. Verbundmaterial nach einem der Ansprüche 21 oder 22, **dadurch gekennzeichnet, dass** das Verbundmaterial eine OTR kleiner 10⁻³ cm³/m²·d·bar und/oder eine WVTR kleiner 10⁻³ g/m²·d·bar aufweist.

## Claims

1. Process for the production of a layer-type or layered inorganic/organic composite material in which a predominantly inorganic material is provided, the material comprising organic material in a proportion of at most 20% by volume, and
in which a polymeric material is provided,
**characterized in that**
the melting point of the predominantly inorganic material is below 500°C, that the predominantly inorganic material and the polymeric material are in each case melted and
that the predominantly inorganic material and the polymeric material are coextruded from the melt and thus form the composite material, the predominantly inorganic material extruded comprising a glass.

2. Process according to Claim 1, **characterized in that**
the predominantly inorganic material and the polymeric material are coextruded via a coextrusion die or a coextrusion adapter.

3. Process according to Claim 1 or 2, **characterized in that**
the predominantly inorganic material is coextruded between two layers of a polymeric material, the two polymeric layers preferably being extruded from respectively different polymeric material.

4. Process for the production of an inorganic/organic composite material in which a backing is provided and in which a predominantly inorganic material is applied to the backing, the material comprising organic material in a proportion of at most 20% by volume,
**characterized in that**
the predominantly inorganic material has a melting point below 500°C,
that the predominantly inorganic material is melted,
that the predominantly inorganic material is extruded from the melt onto the backing, the predominantly inorganic material extruded comprising a glass, and that the backing provided is composed of polymeric material and/or
that a polymeric material is applied to that side of the predominantly inorganic material which is opposite to the backing.

5. Process according to Claim 4, **characterized in that**
to that side of the predominantly inorganic material which is opposite to the backing a polymeric material is applied by lamination, applied from a solution or dispersion or extruded from the melt.

6. Process according to any of Claims 1 to 5, **characterized in that**
the polymeric material is applied to the predominantly inorganic material during the period when its temperature is above the melting point or glass transition temperature.

7. Process according to any of Claims 1 to 6, **characterized in that**
the composite material is produced with a thickness below 200 µm, in particular below 100 µm.

8. Process according to any of Claims 1 to 7, **characterized in that**
the predominantly inorganic material and/or the composite material is oriented after the extrusion process, preferably
is longitudinally oriented at least in the ratio 1:2, more preferably at least in the ratio 1:5, and/or preferably
is transversely oriented at least in the ratio 1:2, more preferably at least in the ratio 1:5.

9. Process according to any of Claims 1 to 8, **characterized in that**
the composite material is heat-conditioned after the extrusion process at a temperature between 30°C and the softening point or the melting point of the predominantly inorganic material.

10. Process according to any of Claims 1 to 9, **characterized in that**
the predominantly inorganic material extruded comprises lead glass, phosphate glass or borate glass.

11. Process according to Claim 10, **characterized in that**
the predominantly inorganic material extruded comprises a glass with a narrow melting range, in particular one whose softening point is not more than 50°C above the glass transition temperature.

12. Process according to any of Claims 1 to 11, **characterized in that**
an additive for flow improvement is added to the predominantly inorganic material prior to or during the melting process.

13. Process according to any of claims 1 to 12, **characterized in that**
the predominantly inorganic material used in the extrusion process comprises an inorganic material whose proportion of organic material is at most 10% by volume, preferably at most 1% by volume.

14. Process according to any of Claims 1 to 13, **characterized in that**
the polymeric material applied, in particular extruded, comprises a high-temperature-resistant thermoplastic.

15. Process according to any of Claims 1 to 14, **characterized in that**
the predominantly inorganic material extruded comprises a transparent material, in particular with a transmittance of at least 70% in the visible spectral region and/or the polymeric material applied, in particular extruded, comprises a transparent material, in particular with a transmittance of at least 70% in the visible spectral region.

16. Process according to any of Claims 1 to 15, **characterized in that**
the polymeric material applied, in particular extruded, comprises an initially non-transparent material and transparency of the polymeric material is achieved via further processing, in particular with a transmittance of at least 70% in the visible spectral region.

17. Process according to any of Claims 1 to 16, **characterized in that**
the polymeric material applied, in particular extruded, comprises a polymeric material whose coefficient of thermal expansion in the temperature range from 20°C to 200°C is below 25·10⁻⁶ K⁻¹ and/or
the predominantly inorganic material extruded comprises a material, in particular glass, whose coefficient of thermal expansion in the temperature range from 20°C to 300°C is above 12·10⁻⁶ K⁻¹.

18. Process according to any of Claims 1 to 17, **characterized in that**
an additive for lowering the coefficient of thermal expansion is added to the polymeric material prior to or during the melting process, preferably that nano-scale particles are added to the polymeric material.

19. Process according to any of Claims 1 to 18, **characterized in that**
the polymeric material applied, in particular extruded, comprises an elastomeric or elastomer-modified polymer, preferably an adhesive.

20. Process according to any of Claims 1 to 19, **characterized in that**
the composite material is stamped or, in particular by means of a laser, or water jet, is cut.

21. Composite material with at least one layer of a predominantly inorganic material, the material comprising orgamic material in a proportion of at most 20% by volume, and at least one layer of a polymeric material,
**characterized in that**
at least the predominantly inorganic layer which comprises organic material in a proportion of at most 20% by volume has been extruded, the predominantly inorganic material being a glass and having a thickness of between 0.5 and 25 µm, preferably between 0.5 and 10 µm, particularly preferably between 0.5 and 5 µm.

22. Composite material according to Claim 21, **characterized by** production according to the process according to any of Claims 1 to 20.

23. Composite material according to either of Claims 21 and 22, **characterized in that**
the OTR of the composite material is below 10⁻³ cm³/m²·d·bar and/or the WVTR is below 10⁻³ g/m²·d·bar.

## Revendications

1. Procédé pour la production d'un matériau composite inorganique/organique stratifié ou en couches, dans lequel on dispose un matériau majoritairement inorganique, le matériau contenant du matériau organique en une proportion d'au maximum 20 % en volume et
dans lequel on dispose un matériau polymère,
**caractérisé en ce que**
le matériau majoritairement inorganique présente une température de fusion inférieure à 500 °C, **en ce qu'**on fait fondre chacun le matériau majoritairement inorganique et le matériau polymère et
**en ce qu'**on soumet à une coextrusion le matériau majoritairement inorganique et le matériau polymère à partir de la masse fondue et le matériau composite est ainsi formé, un verre étant extrudé en tant que matériau majoritairement inorganique.

2. Procédé selon la revendication 1, **caractérisé en ce que**
le matériau majoritairement inorganique et le matériau polymère sont coextrudés à travers une filière de coextrusion ou un adaptateur pour coextrusion.

3. Procédé selon la revendication 1 ou 2, **caractérisé en ce que**
le matériau majoritairement inorganique est coextrudé entre deux couches d'un matériau polymère, de préférence les deux couches de polymère étant extrudées chacune à partir d'un matériau polymère différent.

4. Procédé pour la production d'un matériau composite inorganique/organique, dans lequel on dispose un support et dans lequel on applique sur le support un matériau majoritairement inorganique, le matériau contenant du matériau organique en une proportion d'au maximum 20 % en volume,
**caractérisé en ce que**
le matériau majoritairement inorganique présente une température de fusion inférieure à 500 °C,
**en ce qu'**on fait fondre le matériau majoritairement inorganique,
**en ce que** qu'on soumet à une extrusion le matériau majoritairement inorganique à partir de la masse fondue sur le support, un verre étant extrudé en tant que matériau majoritairement inorganique, et
**en ce que** le support est préparé à partir d'un matériau polymère et/ou **en ce qu'**on applique un matériau polymère sur la face opposée au support du matériau majoritairement inorganique.

5. Procédé selon la revendication 4, **caractérisé en ce**
**qu'**on dépose à la calandre, applique à partir d'une solution ou dispersion ou extrude à partir de la masse fondue un matériau polymère sur la face opposée au support du matériau majoritairement inorganique.

6. Procédé selon l'une quelconque des revendications 1 à 5, **caractérisé en ce**
**qu'**on applique le matériau polymère sur le matériau majoritairement inorganique tant que sa température est supérieure à la température de fusion ou de transition vitreuse.

7. Procédé selon l'une quelconque des revendications 1 à 6, **caractérisé en ce**
**qu'**on produit le matériau composite en une épaisseur inférieure à 200 µm, en particulier inférieure à 100 µm.

8. Procédé selon l'une quelconque des revendications 1 à 7, **caractérisé en ce**
**qu'**après l'extrusion on étire le matériau majoritairement inorganique et/ou le matériau composite, de préférence
on l'étire longitudinalement au moins dans le rapport 1:2, de façon plus particulièrement préférée au moins dans le rapport 1:5 et/ou de préférence
on l'étire transversalement au moins dans le rapport 1:2, de façon plus particulièrement préférée au moins dans le rapport 1:5.

9. Procédé selon l'une quelconque des revendications 1 à 8, **caractérisé en ce**
**qu'**après l'extrusion on soumet le matériau composite à un traitement thermique à une température comprise entre 30 °C et le point de ramollissement ou le point de fusion du matériau majoritairement inorganique.

10. Procédé selon l'une quelconque des revendications 1 à 9, **caractérisé en ce**
**qu'**en tant que matériau majoritairement inorganique on soumet à une extrusion du verre au plomb, du verre de phosphates ou du verre borate.

11. Procédé selon la revendication 10, **caractérisé en ce**
**qu'**en tant que matériau majoritairement inorganique on soumet à une extrusion un verre ayant une étroite plage de fusion, en particulier une plage dans laquelle la température de ramollissement ne se situe pas à plus de 50 °C au-dessus de la température de transition vitreuse.

12. Procédé selon l'une quelconque des revendications 1 à 11, **caractérisé en ce**
**qu'**avant ou pendant la fusion on ajoute au matériau majoritairement inorganique un additif destiné à l'amélioration de l'écoulement.

13. Procédé selon l'une quelconque des revendications 1 à 12, **caractérisé en ce que**
dans l'extrusion on utilise en tant que matériau majoritairement inorganique un matériau inorganique ayant une teneur en matériau organique d'au maximum 10 % en volume, de préférence une teneur en matériau organique d'au maximum 1 % en volume.

14. Procédé selon l'une quelconque des revendications 1 à 13, **caractérisé en ce**
**qu'**en tant que matériau polymère on applique, en particulier soumet à une extrusion, une matière thermoplastique à haute résistance à la température.

15. Procédé selon l'une quelconque des revendications 1 à 14, **caractérisé en ce**
**qu'**en tant que matériau majoritairement inorganique on soumet à une extrusion un matériau transparent, en particulier ayant un degré de transmission d'au moins 70 % dans la région visible du spectre et/ou
en tant que matériau polymère on applique, en particulier soumet à une extrusion, un matériau transparent, en particulier ayant un degré de transmission d'au moins 70 % dans la région visible du spectre.

16. Procédé selon l'une quelconque des revendications 1 à 15, **caractérisé en ce**
**qu'**en tant que matériau polymère on applique, en particulier soumet à une extrusion, un matériau d'abord non transparent et on parvient à une transparence du matériau polymère par une nouvelle transformation, en particulier à un degré de transmission d'au moins 70 % dans la région visible du spectre.

17. Procédé selon l'une quelconque des revendications 1 à 16, **caractérisé en ce**
**qu'**en tant que matériau polymère on applique, en particulier soumet à une extrusion, un matériau polymère qui présente une dilatation à la chaleur de moins de 25.10⁻⁶ K⁻¹ dans une plage de température de 20 °C à 200 °C et/ou
en tant que matériau majoritairement inorganique on soumet à une extrusion un matériau, en particulier un verre, qui présente une dilatation à la chaleur de plus de 12.10⁻⁶ K⁻¹ dans une plage de température de 20 °C à 300 °C.

18. Procédé selon l'une quelconque des revendications 1 à 17, **caractérisé en ce**
**qu'**avant ou pendant la fusion on ajoute au matériau polymère un additif destiné à réduire la dilatation à la chaleur,
de préférence en ce qu'on ajoute des particules nanométriques au matériau polymère.

19. Procédé selon l'une quelconque des revendications 1 à 18, **caractérisé en ce**
**qu'**en tant que matériau polymère on applique, en particulier soumet à une extrusion, un polymère élastomère ou modifié en élastomère, de préférence un adhésif.

20. Procédé selon l'une quelconque des revendications 1 à 19, **caractérisé en ce**
**qu'**on poinçonne le matériau composite ou on le découpe, en particulier à l'aide d'un laser ou d'un jet d'eau.

21. Matériau composite comportant au moins une couche d'un matériau majoritairement inorganique, le matériau contenant du matériau organique en une proportion d'au maximum 20 % en volume, et au moins une couche d'un matériau polymère,
**caractérisé en ce**
**qu'**au moins la couche majoritairement inorganique, qui contient du matériau organique en une proportion d'au maximum 20 % en volume, est extrudée, le matériau majoritairement inorganique est un verre et présente une épaisseur comprise entre 0,5 et 25 µm, de préférence entre 0,5 et 10 µm, de façon particulièrement préférée entre 0,5 et 5 µm.

22. Matériau composite selon la revendication 21, **caractérisé par** la production conformément au procédé selon l'une quelconque des revendications 1 à 20.

23. Matériau composite selon l'une quelconque des revendications 21 et 22, **caractérisé en ce que** le matériau composite présente une OTR inférieure à 10⁻³ cm³/m².d.bar et/ou une WVTR inférieure à 10⁻³ g/m².d.bar
